# EUROPÄISCHE PATENTSCHRIFT

(11) **EP 1 033 500 B1**
(45) Veröffentlichungstag und Bekanntmachung des Hinweises auf die Patenterteilung: **21.01.2004**
(21) Anmeldenummer: 00103560.9
(22) Anmeldetag: 19.02.2000
(51) Int. Cl.: F16B 19/10, F16B 12/20

(54) **Beschlag**
Fitting
Dispositif de fixation

(30) Priorität: 04.03.1999 AT 36899
(43) Veröffentlichungstag der Anmeldung: 06.09.2000
(73) Patentinhaber: Julius Blum Gesellschaft m.b.H., 6973 Höchst (AT)
(72) Erfinder: Huber, Edgar, 6971 Hard (AT)
(74) Vertreter: Torggler, Paul Norbert, Dr.

(56) Entgegenhaltungen:
- DE-U- 29 605 547
- GB-A- 568 171
- GB-A- 990 970

## Beschreibung

Die Erfindung bezieht sich auf einen Beschlag zur lösbaren Befestigung an einem Möbelteil mit einem am Möbelteil anliegenden Beschlagkörper mit mindestens einer Spreizhülse, die in einer in den Möbelteil eingesetzten Haltehülse verankerbar ist und mit einem stiftförmigen Spreizteil für die Spreizhülse, wobei an der vom Möbelteil abgewandten Seite des Beschlagkörpers ein Spannteil für die Spreizhülse angeordnet ist, der sich vorzugsweise am Beschlagkörper abstützt, und die Spreizhülse am Außenmantel und/oder die Haltehülse am Innenmantel mehrere in Längsrichtung versetzte Haltevorsprünge aufweisen, über die die Spreizhülse und die Haltehülse kuppelbar sind.

Aus der GB 990 970 A ist ein Befestigungsbeschlag zum Verbinden zweier Platten bekannt, der eine äußere Haltehülse und eine innere Spreizhülse aufweist. Es ist weiters ein stiftförmiger Spreizteil vorgesehen, der beim Verspannen nach außen gedrückt wird, nicht aber axial verschoben.

Aufgabe der Erfindung ist es einen Beschlag zu schaffen, der ohne Werkzeug montierbar und demontierbar ist und der eine sehr sichere Befestigung des Beschlagkörpers auch bei kleinen Bohrlöchern gewährleistet.

Die erfindungsgemäße Aufgabe wird dadurch gelöst, daß der stiftförmige Spreizteil im Beschlagkörper axial unverschiebbar verankert ist und die Spreizhülse mittels des Spannteiles relativ zum Spreizteil und zum Beschlagkörper axial bewegbar ist.

Da beim Verspannen die Spreizhülse relativ zur Haltehülse axial verschoben wird, wird der Beschlagkörper vorgespannt und eine besonders gute Verankerung am Möbelteil erzielt.

Mit dem erfindungsgemäßen Beschlag wird auch verhindert, daß die Spreizhülse in der Spreizstellung aus der Bohrung im Möbelteil herausgerissen werden kann. Der erfindungsgemäße Beschlag ist beispielsweise auch in einer Spanplatte minderer Qualität absolut sicher verankerbar.

Ein weiteres Ausführungsbeispiel der Erfindung sieht vor, daß die Haltehülse in Montagelage an der vom Beschlagkörper abgewendeten Seite des Möbelteiles aus diesem herausragt und vorzugsweise in einem weiteren Beschlagkörper verankert ist.

Um beim montierten Beschlag die Vorspannung der Beschlagkörper zu verbessern, ist in einem bevorzugten Ausführungsbeispiel der Erfindung vorgesehen, daß beide Beschlagkörper plattenförmig ausgeführt sind, wobei die plattenförmigen Beschlagkörper, die sich jeweils mit einem Rand am Möbelteil abstützen, sich beim Verspannen der Spreizhülse mit der Haltehülse durchbiegen.

Ein weiteres Ausführungsbeispiel der Erfindung sieht vor, daß der Spannteil als Kipphebel ausgebildet ist, der mittels einer Achse an der Spreizhülse angelenkt ist und der einen Nocken aufweist, der in der Spannstellung auf den Beschlagkörper drückt.

Nachfolgend werden verschiedene Ausführungsbeispiele des Beschlages anhand der Figuren der beiliegenden Zeichnungen beschrieben.
Die Fig. 1 zeigt auseinandergezogen und im Schnitt die Teile eines erfindungsgemäßen Beschlages und einen Möbelteil vor der Montage des Beschlages,
die Fig. 2 zeigt einen Schnitt durch einen Möbelteil und einen erfindungsgemäßen Beschlag, wobei der Beschlag in der unverspannten Stellung gezeigt ist,
die Fig. 2a zeigt im vergrößerten Maßstab den Ausschnitt A der Fig. 2,
die Fig. 3 zeigt einen Schnitt durch einen Möbelteil und einen erfindungsgemäßen Beschlag in der Spannstellung,
die Fig. 3a im vergrößerten Maßstab den Ausschnitt A der Fig. 3,
die Fig. 4 und 5 zeigen je einen Schnitt durch einen Möbelteil und einen erfindungsgemäßen Beschlag, wobei der Einsatz des Beschlages bei Möbelteilen unterschiedlicher Stärke gezeigt ist,
die Fig. 6 zeigt einen Schnitt durch zwei Möbelteile und einen erfindungsgemäßen Beschlag, und
die Fig. 7 bis 9 zeigen drei verschiedene Ausführungsbeispiele eines erfindungsgemäßen Beschlages in verschiedenen schaubildlichen Ansichten.

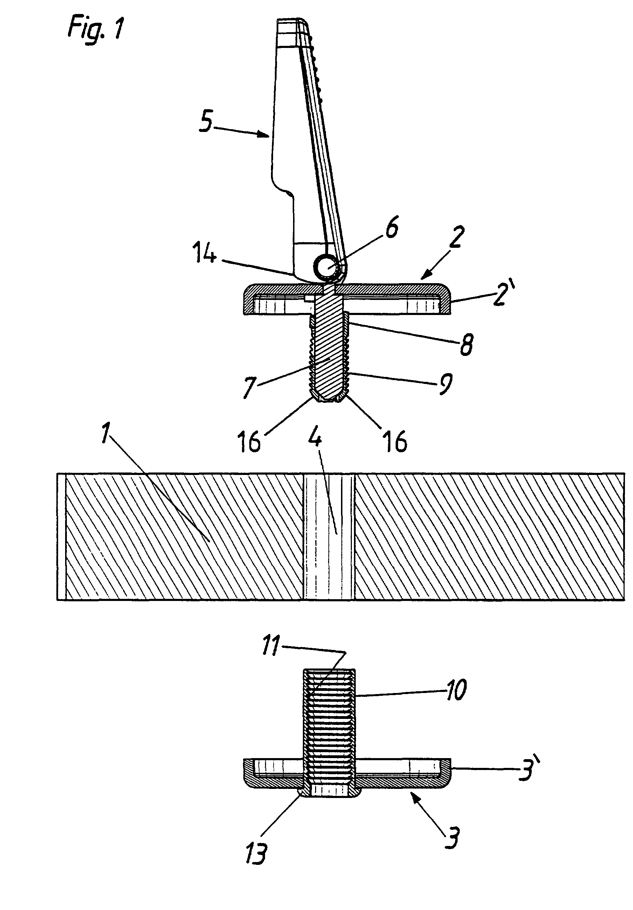

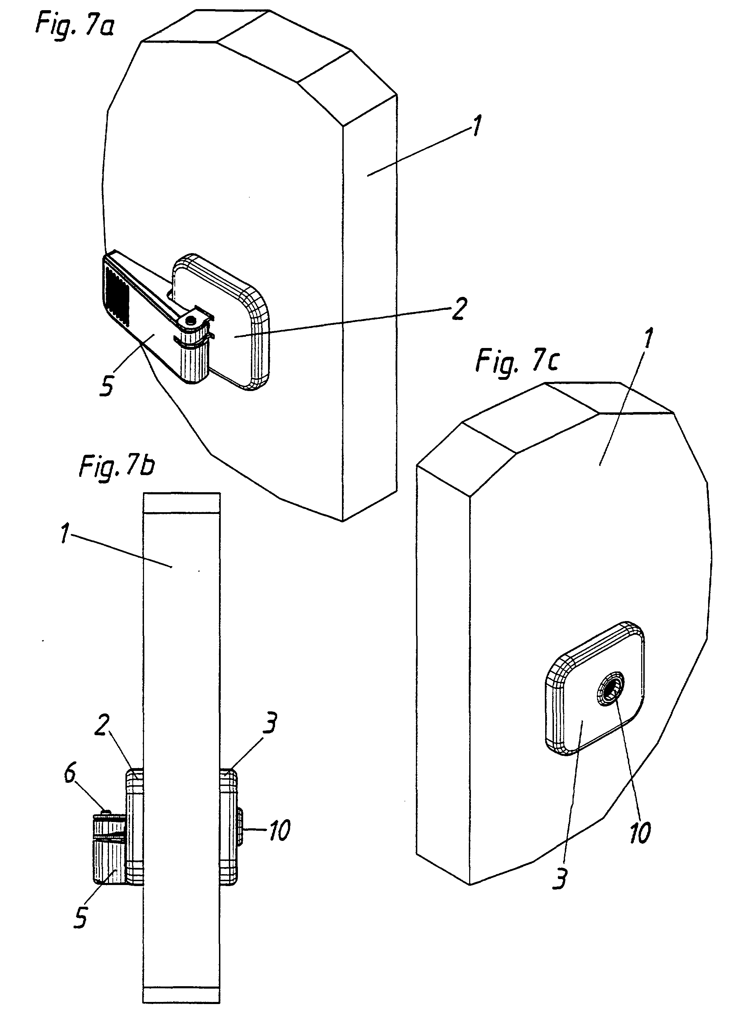

In den in den Fig. 1 bis 7 gezeigten Ausführungsbeispielen weist der erfindungsgemäße Beschlag, der an einem Möbelteil 1, beispielsweise einer Möbelseitenwand, verankerbar ist, zwei Beschlagkörpem 2, 3 auf, die an beiden Seiten des Möbelteiles 1 an diesem anliegen. Die beiden Beschlagkörper 2, 3 werden durch eine Spreizhülse 8 und eine Haltehülse 10 verbunden. Die Spreizhülse 8 und die Haltehülse 9 ragen beide in eine durchgehende Bohrung 4 im Möbelteil 1, und zwar sind die Spreizhülse 8 und die Haltehülse 10 von entgegengesetzten Seiten in die Bohrung 4 eingesteckt.

Die Spreizhülse 8 ragt, wenn der Beschlag auf den Möbelteil 1 aufgesetzt wird, in die Haltehülse 10.

Die Spreizhülse 8 ist über Laschen od. dgl. mit einer Achse 6 verbunden, auf der ein Spannteil 5 lagert, der im Ausführungsbeispiel als manuell betätigbarer Kipphebel ausgeführt ist.

Im Beschlagkörper 2 ist ein stiftförmiger Spreizteil 7 verankert, wobei der Spreizteil 7 einen Zapfen 15 aufweist, der im Beschlagkörper 2 vernietet ist.

Die Spreizhülse 8 weist an ihrem Außenmantel mehrere hintereinander angeordnete, ringförmige Vorsprünge 9 auf und die Haltehülse 10 ist an ihrem Innenmantel mit korrespondierenden ringförmigen Vorsprüngen 11 versehen.

Um die Spreizung der Spreizhülse 8 zu erleichtern, ist diese zumindestens über einen Teil ihrer Länge geschlitzt ausgeführt und somit zumindestens in ihrem vorderen Bereich in Spreizabschnitte 16 geteilt. Wird die Spreizhülse 8 gespreizt, werden die freien Enden der Spreizabschnitte 16 nach außen, d. h. an die Innenwandung der Haltehülse 10 gedrückt.

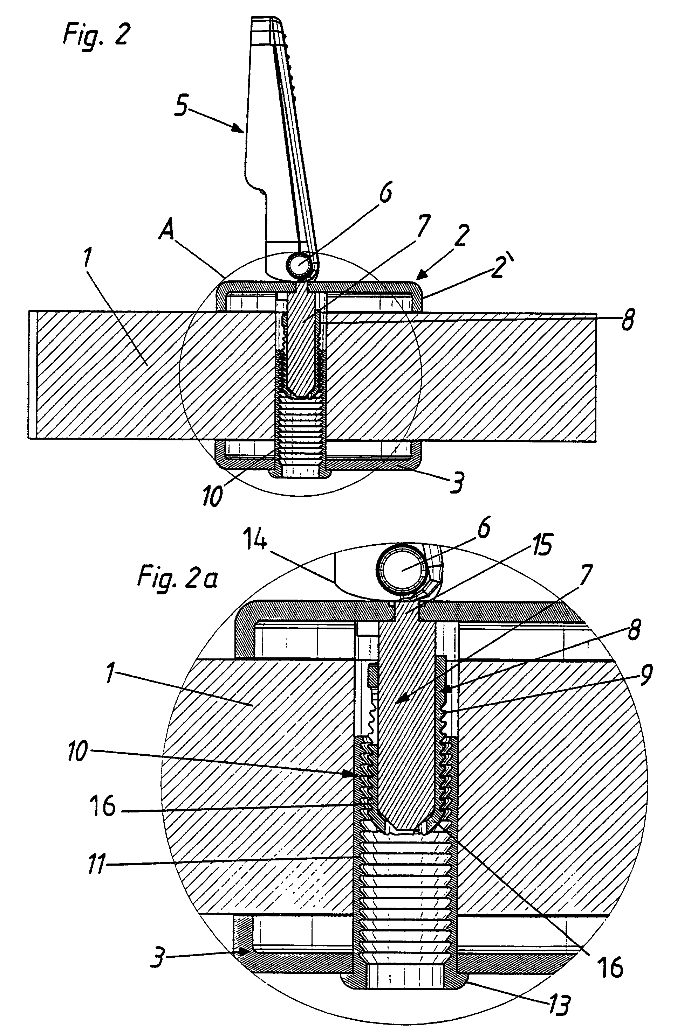

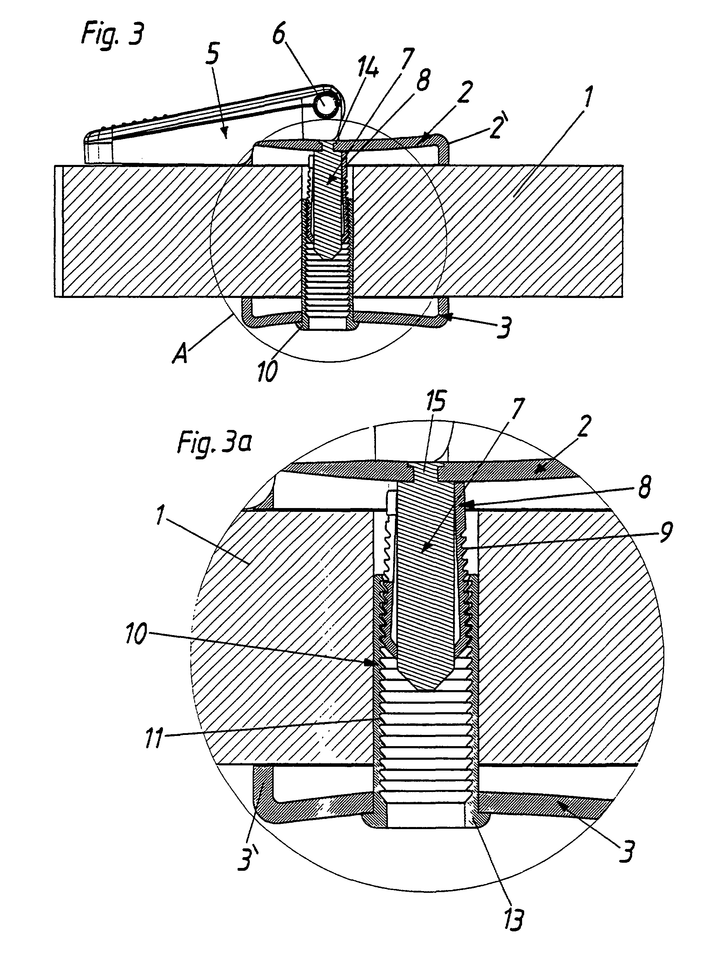

Wird der Spannteil 5 von der in der Fig. 2 gezeigten Stellung in die in der Fig. 3 gezeigte Stellung gekippt, wird die Spreizhülse 8 zum Beschlagkörper 2 gezogen und dabei wird sie in ihrem freien Bereich durch den Spreizteil 7 gespreizt, sodaß die am Außenmantel angeordneten Vorsprünge 9 mit den Vorsprüngen 11 am Innenmantel der Haltehülse 10 in Eingriff kommen. Auf diese Art kommt es zu einer sehr stabilen Kupplung zwischen der Spreizhülse 8 und der Haltehülse 11.

Da die Vorsprünge 9 über einen Großteil der Länge der Spreizhülse 8 angeordnet sind und die Vorsprünge 11 sich praktisch über die gesamte Länge der Haltehülse 10 erstrecken, können die Spreizhülse 8 und die Haltehülse 10 über einen weiten Bereich miteinander gekuppelt werden, d. h. die Breite des Möbelteiles 1, an dem die Beschlagkörper 2, 3 verankert sind, kann stark variieren. Dadurch, daß immer mehrere Vorsprünge 9, 11 miteinander in Eingriff sind, wird ein sehr fester Halt des Beschlages erreicht.

Die Vorsprünge 9, 11 weisen einen dreieckigen Querschnitt auf und sind widerhakenartig gegeneinander gerichtet, so daß die Verankerung der Spreizhülse 8 in der Haltehülse 10 weiter verbessert wird.

Im gezeigten Ausführungsbeispiel weist die Haltehülse 10 an ihrem freien Ende einen flanschartigen Rand 13 auf, mit dem sie sich am Beschlagkörper 3 abstützt.

Die Haltehülse 10 ragt dabei durch eine Bohrung im Beschlagkörper 3.

Die Beschlagkörper 2, 3 sind plattenförmig ausgebildet und könnten beispielsweise als Grundplatte für einen Schamierarm dienen.

Beide Haltekörper 2, 3 sind mit Rändern 2', 3' versehen, mit denen sie sich am Möbelteil 1 abstützen. Beim Spannen des Spannteiles 5 werden beide Beschlagkörper 2, 3, wie in den Fig. 3 bis 6 gezeigt, durchgebogen, sodaß der Beschlag unter Vorspannung am Möbelteil 1 gehalten wird.

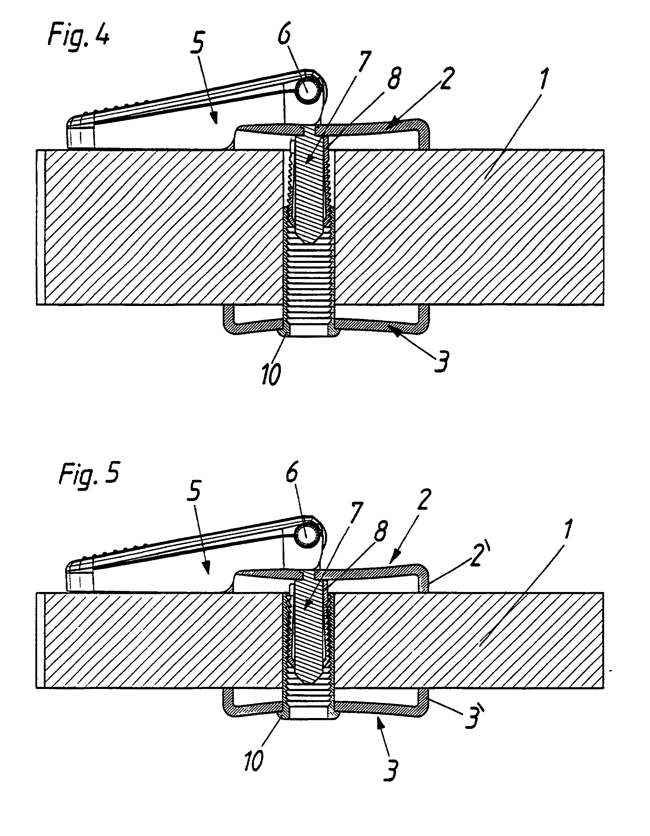

Die Fig. 4 und 5 zeigen die Montage des Beschlages an Möbelteilen 1 unterschiedlicher Breite, wobei die Eindringtiefe der Spreizhülse 8 in die Haltehülse 10 sichtbar ist.

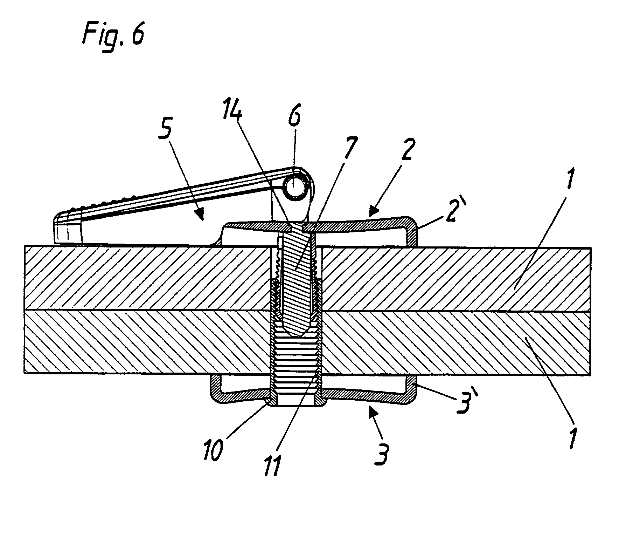

Wie aus der Fig. 6 ersichtlich, kann der Beschlag auch dazu verwendet werden, zwei aneinanderliegende plattenartige Möbelteile 1 miteinander zu verbinden.

Der Spannteil 5 ist mit einem Nocken 14 versehen, der in der in den Fig. 3, 6 gezeigten Spannstellung auf den Beschlagkörper 2 drückt.

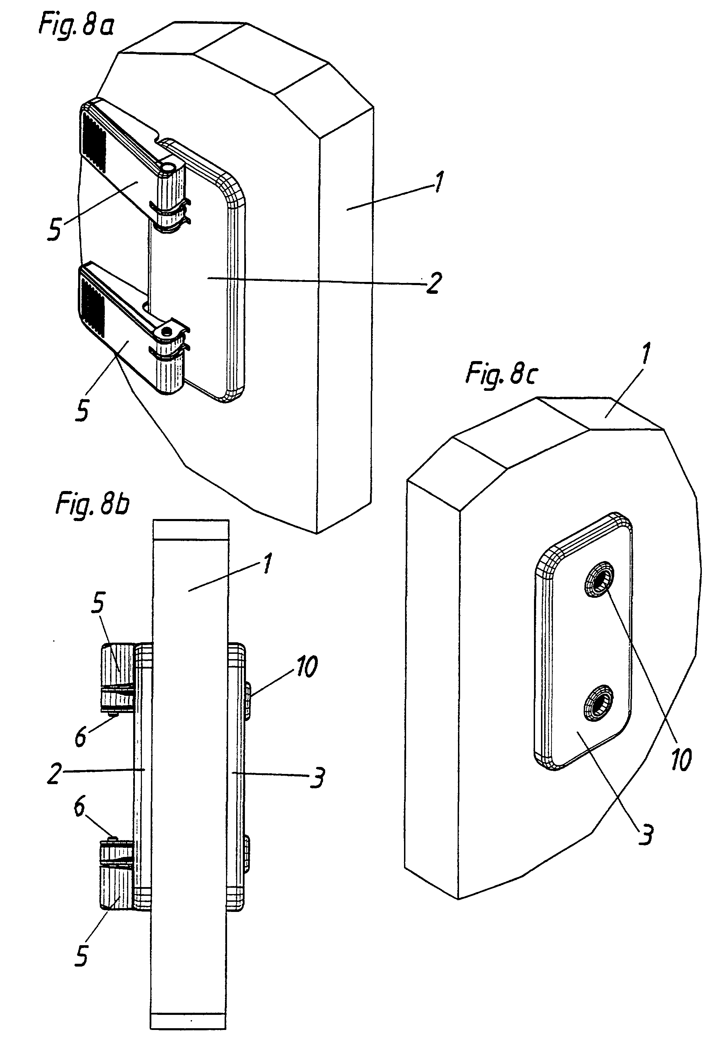

Der erfindungsgemäße Beschlag kann jeweils zwei Beschlagkörper 2, 3 mittels einer Haltehülse 10, einer Spreizhülse 8 und einem Spannteil 5 verbinden. Es können jedoch auch pro Beschlag, wie in den Fig. 8 bis 9 gezeigt, zwei Haltehülsen 10, zwei Spreizhülsen 8 und zwei Spannteile 5 vorgesehen sein, die die beiden Beschlagkörper 2, 3 miteinander verbinden. Vorteilhaft sind dabei die Spreizhülsen 8 von den einander gegenüberliegenden Seiten des Möbelteiltes 1 in die Bohrung 4 eingesteckt.

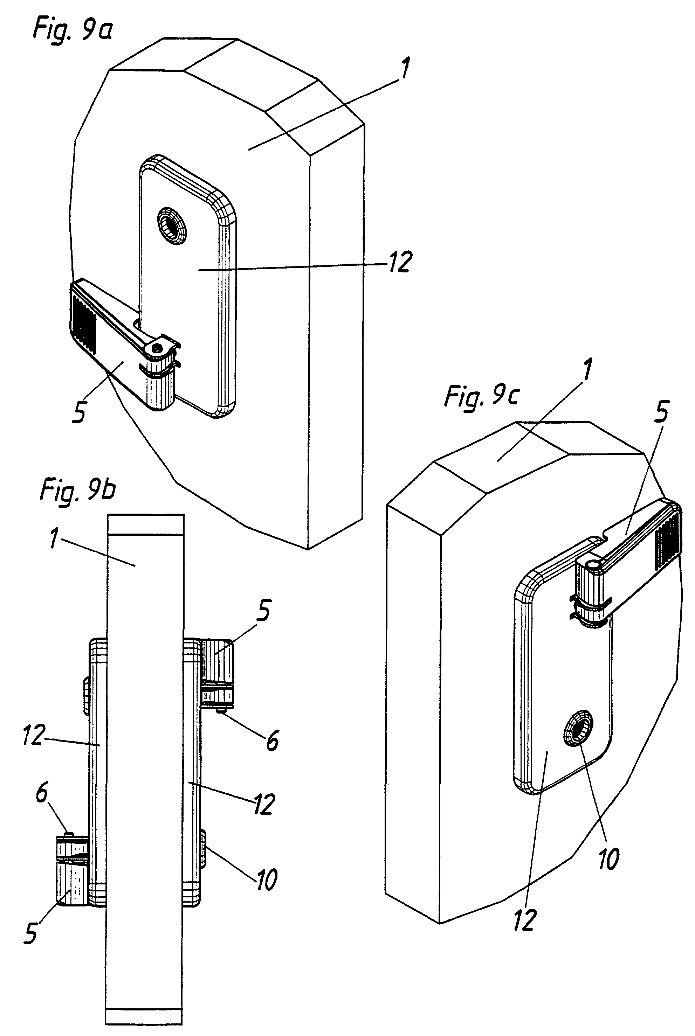

Im Ausführungsbeispiel nach den Fig. 9a bis 9c ist dabei jedem Beschlagkörper 2, 3 ein Spannteil 5 zugeordnet, d. h. die Spannteile 5 befinden sich an beiden Seiten des Möbelteiles 1.

## Patentansprüche

1. Beschlag zur lösbaren Befestigung an einem Möbelteil mit einem am Möbelteil anlegbaren Beschlagkörper mit mindestens einer Spreizhülse, die in einer in den Möbelteil eingesetzten Haltehülse verankerbar ist und mit einem stiftförmigen Spreizteil für die Spreizhülse, wobei an der vom Möbelteil abgewandten Seite des Beschlagkörpers ein Spannteil für die Spreizhülse angeordnet ist, der sich vorzugsweise am Beschlagkörper abstützt, und die Spreizhülse am Außenmantel und/oder die Haltehülse am Innenmantel mehrere in Längsrichtung versetzte Haltevorsprünge aufweisen, über die die Spreizhülse und die Haltehülse kuppelbar sind, **dadurch gekennzeichnet, daß** der stiftförmige Spreizteil (7) im Beschlagkörper (2) axial unverschiebbar verankert ist und die Spreizhülse (8) mittels des Spannteiles (5) relativ zum Spreizteil (7) und zum Beschlagkörper (2) axial bewegbar ist.

2. Beschlag nach Anspruch 1, **dadurch gekennzeichnet, daß** die Haltehülse (10) in Montagelage an der vom Beschlagkörper (2) abgewendeten Seite des Möbelteiles (1) aus diesem herausragt und vorzugsweise in einem weiteren Beschlagkörper (3) verankert ist.

3. Beschlag nach Anspruch 2, **dadurch gekennzeichnet, daß** beide Beschlagkörper (2, 3) plattenförmig ausgeführt sind.

4. Beschlag nach Anspruch 3, **dadurch gekennzeichnet, daß** die plattenförmigen Beschlagkörper (2, 3), die sich jeweils mit einem Rand (2', 3') am Möbelteil (1) abstützen, sich beim Verspannen der Spreizhülse (8) mit der Haltehülse (10) durchbiegen.

5. Beschlag nach einem der Ansprüche 2 bis 4, **dadurch gekennzeichnet, daß** die Haltehülse (10) an ihrem aus dem Möbelteil (1) herausragenden Ende mit einem flanschartigen Randvorsprung (13) versehen ist, der in Montagelage am Beschlagkörper (3) oder am Möbelteil (1) anliegt.

6. Beschlag nach einem der Ansprüche 1 bis 5, **dadurch gekennzeichnet, daß** der Spannteil (5) als Kipphebel ausgebildet ist, der mittels einer Achse (6) an der Spreizhülse (8) angelenkt ist und der einen Nocken (14) aufweist, der in der Spannstellung auf den Beschlagkörper (2) drückt.

7. Beschlag nach einem der Ansprüche 1 bis 6, **dadurch gekennzeichnet, daß** zwei Beschlagkörper (12) an zwei einander gegenüberliegenden Seiten eines Möbelteiles (1) über zwei Spreizhülsen (8) und zwei Haltehülsen (10) verankerbar sind und daß an jedem Beschlagkörper (12) ein Spannteil anliegt.

## Claims

1. Fitting for releasable securing to a furniture component with a fitting element, which can be attached to the furniture component, with at least one expansion sleeve which can be anchored in a holding sleeve inserted into the furniture component and with a pin-shaped expansion component for the expansion sleeve, wherein a clamping component for the expansion sleeve is arranged on the side of the fitting element facing away from the furniture component, and preferably rests on the fitting element, and the expansion sleeve has on the outer casing and/or the holding sleeve on the inner casing several longitudinally-stepped holding projections via which the expansion sleeve and the holding sleeve can be coupled, **characterized in that** the pin-shaped expansion component (7) is anchored axially non-displaceable in the fitting element (2) and the expansion sleeve (8) is axially movable by means of the clamping component (5) relative to the expansion component (7) and to the fitting element (2).

2. Fitting according to claim 1, **characterized in that** the holding sleeve (10), when mounted on the side of the furniture component (1) facing away from the fitting element (2), projects from same and is preferably anchored in a further fitting element (3).

3. Fitting according to claim 2, **characterized in that** both fitting elements (2, 3) are designed plate-shaped.

4. Fitting according to claim 3, **characterized in that** the plate-shaped fitting elements (2, 3), each of which rests with an edge (2', 3') on the furniture component (1), bend when the expansion sleeve (8) is braced with the holding sleeve (10).

5. Fitting according to one of claims 2 to 4, **characterized in that** the holding sleeve (10) is provided at its end projecting from the furniture component (1) with a flange-like edge projection (13) which when mounted lies against the fitting element (3) or the furniture component (1).

6. Fitting according to one of claims 1 to 5, **characterized in that** the clamping component (5) is designed as a rocking lever which is linked to the expansion sleeve (8) by means of an axle (6) and which has a cam (14) which presses on the fitting element (2) in the clamped position.

7. Fitting according to one of claims 1 to 6, **characterized in that** two fitting elements (12) can be anchored to two opposite sides of a furniture component (1) via two expansion sleeves (8) and two holding sleeves (10), and a clamping component lies against each fitting element (12).

## Revendications

1. Dispositif de fixation, pour fixer de façon désolidarisable, sur une partie de meuble, avec un corps d'armature pouvant être plaqué sur la partie de meuble, et comprenant au moins une cheville à écartement, pouvant être ancrée dans une cheville de maintien insérée dans la partie de meuble, et avec une partie d'écartement en forme de tige, pour la cheville à écartement, sachant que, sur la face, opposée à la partie de meuble, du corps d'armature,- est disposée une partie de serrage pour la cheville à écartement, qui prend appui de préférence sur le corps d'armature, et la cheville à écartement, présente sur l'enveloppe extérieure, et/ou la cheville de maintien présente sur l'enveloppe intérieure, une pluralité de saillies de maintien décalées en direction longitudinale, par l'intermédiaire desquelles la cheville à écartement et la cheville de maintien sont susceptibles d'être accouplés, **caractérisé en ce que** la partie à écartement (7) en forme de tige est ancrée de façon immobile axialement dans le corps d'armature (2), et la cheville à écartement (8) est déplaçable axialement au moyen de la partie de serrage (5), par rapport à la partie d'écartement (7) et par rapport au corps d'armature (2).

2. Dispositif de fixation selon la revendication 1, **caractérisé en ce que** la cheville de maintien (10), en position de montage, ressort, sur le côté, opposé au corps d'armature (2), de la partie de meuble (1), hors de celle-ci et, de préférence, est ancrée dans un autre corps d'armature (3).

3. Dispositif de fixation selon la revendication 2, **caractérisé en ce que** les deux corps d'armature (2,3), sont conformés en plaque.

4. Dispositif de fixation selon la revendication 3, **caractérisé en ce que** les corps d'armature (2,3) en forme de plaque, qui prennent appui chacun, par un bord (2' , 3'), sur la partie de meuble (1) fléchissent lors du serrage de la cheville à écartement (8) avec la cheville de maintien (10).

5. Dispositif de fixation selon l'une des revendications 2 à 4, **caractérisé en ce que** la cheville de maintien (10), à son extrémité sortant de la partie de meuble (1), est munie d'une saillie de bordure (13) du genre d'une bride, qui, en position de montage, appuie sur le corps d'armature (3) ou sur la partie de meuble (1).

6. Dispositif de fixation selon l'une des revendications 1 à 5, **caractérisé en ce que** la partie de serrage (5) est réalisée sous la forme de levier basculant, articulée, à l'aide d'un axe (6), sur la cheville à écartement (8), et présentant un ergot (14), qui, en position de serrage, presse sur le corps d'armature (2).

7. Dispositif de fixation selon l'une des revendications 1 à 6, **caractérisé en ce que** deux corps d'armature (12) sont susceptibles d'être ancrés sur deux côtés, opposés l'un à l'autre, d'une partie de meuble (1), par l'intermédiaire de deux chevilles à écartement (8) et deux chevilles de maintien (10), et **en ce qu'**une partie de serrage appuie sur chaque corps d'armature (12).
